(19) Europäisches Patentamt
European Patent Office
Office européen des brevets

(11) EP 3 572 971 B1

(12) EUROPÄISCHE PATENTSCHRIFT

(45) Veröffentlichungstag und Bekanntmachung des Hinweises auf die Patenterteilung:
24.02.2021 Patentblatt 2021/08

(51) Int Cl.:
G06K 9/00 (2006.01)

(21) Anmeldenummer: 18173619.0

(22) Anmeldetag: 22.05.2018

(54) **ABSICHERN EINES ÜBERWACHUNGSBEREICHS MIT MINDESTENS EINER MASCHINE**

SECURING A SURVEILLANCE AREA WITH AT LEAST ONE MACHINE

PROTECTION D'UNE ZONE DE SURVEILLANCE À AU MOINS UNE MACHINE

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR

(43) Veröffentlichungstag der Anmeldung:
27.11.2019 Patentblatt 2019/48

(73) Patentinhaber: SICK AG
79183 Waldkirch (DE)

(72) Erfinder:
• Hornung, Dr. Armin
79312 Emmendingen (DE)
• Neubauer, Dr. Matthias
79102 Freiburg (DE)
• Braune, Ingolf
79194 Gundelfingen (DE)
• MacNamara, Dr. Shane
79285 Ebringen (DE)

(56) Entgegenhaltungen:
EP-A1- 2 854 106        EP-A2- 1 933 167
US-A1- 2015 294 483

• SOULAN LIU ET AL: "A computationally efficient denoising and hole-filling method for depth image enhancement", PROCEEDINGS OF SPIE, Bd. 9897, 29. April 2016 (2016-04-29), Seite 98970V, XP055522169, 1000 20th St. Bellingham WA 98225-6705 USA ISSN: 0277-786X, DOI: 10.1117/12.2230495 ISBN: 978-1-5106-2011-7

**Beschreibung**

Die Erfindung betrifft einen sicheren optoelektronischen Sensor, insbesondere 3D-Sensor, sowie ein Verfahren zum Absichern eines Überwachungsbereichs mit mindestens einer Maschine nach dem Oberbegriff von Anspruch 1 beziehungsweise 10.

Das primäre Ziel der Sicherheitstechnik ist, Personen vor Gefahrenquellen zu schützen, wie sie beispielsweise Maschinen im industriellen Umfeld darstellen. Die Maschine wird mit Hilfe von Sensoren überwacht, und wenn demnach eine Situation vorliegt, in der eine Person gefährlich nahe an die Maschine zu gelangen droht, wird eine geeignete Absicherungsmaßnahme ergriffen.

Für die Überwachung werden unter anderem 3D-Sensoren eingesetzt. Dazu zählen zunächst 3D-Kameras in unterschiedlichen Technologien, beispielsweise Stereoskopie, Triangulation, Lichtlaufzeit oder Auswertung der Störung passiver zweidimensionaler Muster oder von projizierten Beleuchtungsmustern. Solche 3D-Sensoren nehmen im Gegensatz zu einer üblichen zweidimensionalen Kamera Bilder auf, die in ihren Pixeln einen Abstands- oder Tiefenwerte enthalten. Diese tiefenaufgelösten oder dreidimensionalen Bilddaten werden auch als Tiefenkarte bezeichnet. Weiterhin bekannt sind in zwei oder allen drei Richtungen abtastende Laserscanner, die über die jeweiligen Abtastwinkel und die gemessene Entfernung ebenfalls dreidimensionale Bilddaten erfassen. Der im Vergleich zu einer zweidimensionalen Bilderfassung höhere Geräte- und Auswertungsaufwand zur Erzeugung von dreidimensionalen Bilddaten wird in vielen Anwendungen durch die Zusatzinformationen gerechtfertigt.

In der Sicherheitstechnik beziehungsweise für den Personenschutz eingesetzte Sensoren müssen besonders zuverlässig arbeiten und deshalb hohe Sicherheitsanforderungen erfüllen, beispielsweise die Norm ISO 13849 für Maschinensicherheit und die Gerätenorm IEC61496 oder EN61496 für berührungslos wirkende Schutzeinrichtungen (BWS). Zur Erfüllung dieser Sicherheitsnormen sind eine Reihe von Maßnahmen zu treffen, wie sichere elektronische Auswertung durch redundante, diversitäre Elektronik, Funktionsüberwachung oder speziell Überwachung der Verschmutzung optischer Bauteile. In sicherheitstechnischen Anwendungen wird typischerweise gefordert, dass ein Objekt mit bestimmter Mindestgröße beziehungsweise bestimmten Mindestabmessungen sicher erkannt wird. Diese Eigenschaft wird als Detektionsvermögen bezeichnet.

Das gängige Absicherungskonzept sieht vor, dass Schutzfelder konfiguriert werden, die während des Betriebs der Maschine vom Bedienpersonal nicht betreten werden dürfen. Erkennt der Sensor einen unzulässigen Schutzfeldeingriff, etwa ein Bein einer Bedienperson, so löst er einen sicherheitsgerichteten Halt der Maschine aus.

In der sicherheitstechnischen Überwachung von Robotern besteht ein zunehmender Wunsch nach engerer Zusammenarbeit mit Personen (MRK, Mensch-Roboter-Kollaboration). Relevante Normen in diesem Zusammenhang sind beispielsweise die ISO 10218 für Industrieroboter oder die ISO 15066 für kollaborierende Roboter. In der MRK sollten Schutzfelder und Sicherheitsabstände möglichst klein und eventuell sogar situationsangepasst konfiguriert werden, natürlich unter der Vorgabe, dass die Sicherheit gewährleistet bleibt. Die Normen ISO13854, ISO 13855, ISO 13857 befassen sich mit der Festlegung von Sicherheitsabständen.

Eine Bewertung von Objekten und Maschinen bezüglich Geschwindigkeit und gegenseitiger Entfernung wird in den genannten Roboternormen als "Speed and Separation Monitoring" bezeichnet. Sichere überwachende Sensoren, wie Laserscanner oder 3D-Kameras, unterstützen das aber nicht. Sie arbeiten weiterhin mit den üblichen Schutzfeldern, und sie liefern nur ein binäres Abschaltsignal, ob ein Schutzfeld verletzt ist oder nicht. Zwar ist die Sicherheit auf diese Weise gewährleistet, aber nicht besonders flexibel und auch häufig mit unnötigen Sicherheitszuschlägen und damit Einschränkungen der Verfügbarkeit, da die Schutzfelder für worst-case-Szenarien und nicht die tatsächliche aktuelle Situation konfiguriert sind.

Grundvoraussetzung für eine Absicherung ist die zuverlässige Erfassung sämtlicher Objekte im Umfeld einer Gefahrenquelle, die als Person oder Körperteil in Frage kommen. Das ist aber besonders bei 3D-Sensoren eine sehr hohe Anforderung. Problematisch sind beispielsweise je nach Technologie des 3D-Sensors Messfehler an Kanten, dunkle Objekte, metallische Bereiche oder konturlose Bereiche, die zu unsicheren Tiefenschätzungen führen können, sogenannten Fehlstellen, Lücken oder Löcher der Erfassung. Bei der Objekterkennung werden solche Lücken mangels besseren Wissens vorsichtshalber als Vordergrund und damit wie ein Objekt behandelt.

Da der Sensor im abgeschatteten Bereich hinter einem Objekt nicht detektionsfähig ist, sollte die Auswertung mit dem projektiven Schatten hinter einem Objekt so umgehen, als gehöre der gesamte projektive Schatten zu dem Objekt. Das gilt entsprechend auch für Lücken, für die aber kein gültiger Abstandswert vorliegt. Die Konsequenz ist, dass Lücken als Objekte im Abstand Null, also unmittelbar vor dem Sensor, betrachtet und folglich die gesamten Sichtstrahlen der Lücke als Objekt behandelt werden. Das sorgt dann zwar für die erforderliche Sicherheit, ist aber eine ungünstige Überschätzung des Ausmaßes der Lücke durch Unterstellung des schlechtesten Falls.

Die EP 2 275 990 B1 befasst sich mit Lücken in der Tiefenkarte und wählt gerade den soeben beschriebenen konservativen Ansatz. Es erfolgt ein sicherheitsgerichteter Abschaltbefehl, wenn es Lücken oder zusammenhängende Pixelbereiche ohne Lücken gibt, die jeweils größer sind als das kleinste zu detektierende Objekt, wobei die Größe einer Lücke unter Annahme des schlechtesten Falls an den Rand projiziert wird. Dieser Rand im schlechtesten Fall liegt direkt vor dem Sensor.

Die EP 2 819 109 A1 offenbart einen 3D-Sensor, der Objekte ab einer Mindestgröße in einem Detektionsfeld erkennt. Um die projektive Geometrie einer Stereokamera korrekt zu berücksichtigen, werden Bereiche der Tiefenkarte mit passend gewählten Schablonen verglichen. Lücken werden dabei wie eine Objektstruktur direkt an der Empfangsoptik behandelt. Zudem erfolgt in EP 2 819 109 A1 die Objekterkennung in direkter Verknüpfung mit Detektionsfeldern. Für ein nicht auf Schutzfeldern basierendes Sicherheitskonzept ist das demnach ungeeignet.

Die US 7 925 077 B2 offenbart ein Verfahren zum Schätzen von Disparitäten für die Auswertung einer Stereokamera. Dabei werden diverse Filter vorgeschlagen, um die Schätzung zu verbessern und zu plausibilisieren. Es wird aber nicht diskutiert, wie mit dennoch verbleibenden Lücken umzugehen ist, erst recht nicht aus sicherheitstechnischer Perspektive.

Die EP 3 200 122 A1 offenbart einen 3D-Sensor mit sicherer Erkennung von Objekten, bei dem die Tiefenkarte mit einem feinen und einem groben Detektionsvermögen ausgewertet wird. Fein erfasste Objekte innerhalb einer Umgebung eines grob erfassten Objekts werden diesem zugeschlagen, isolierte fein erfasste Objekte als Störung ignoriert. Das ermöglicht zwar, nachgelagert bestimmte kleine Objekte noch als nicht sicherheitsrelevant auszufiltern. Dabei werden aber Lücken wie Objekte behandelt und müssen daher sicherheitshalber als direkt vor dem Sensor befindlich angenommen werden.

Die EP 1 933 167 A2 offenbart eine 3D-Kamera, in der mindestens zwei der drei Messprinzipien Stereoskopie, aktive Triangulation und Lichtlaufzeitverfahren verwendet werden.

In der US 2015/0294483 A1 wird eine Mehrfachkameraanordnung vorgesellt, mit der Personen in der Umgebung eines Roboters erfasst werden.

In der Literatur wird außerdem der Ansatz verfolgt, die Lücken in Tiefenkarten zu reparieren oder aufzufüllen. In der US 9 094 660 B2 etwa wird die Auflösung zunächst herunterskaliert, bis die verbleibenden Lücken oder deren Größe unter eine Schwelle fallen. Dann wird das niedriger aufgelöste Bild wieder auf die hohe Auflösung extrapoliert, und Lücken im ursprünglichen Bild werden mit Bilddaten des extrapolierten Bildes gefüllt. Derartige Reparaturen kommen aber in der Sicherheitstechnik kaum in Betracht, da Leben und Gesundheit von Personen nicht von Annahmen über die fehlende Bildinformation abhängig gemacht werden dürfen. Beispielsweise kann eine scheinbar aufzufüllende Lücke in Wahrheit einem Körperteil einer sehr dunkel gekleideten Person entsprechen, das in der Auswertung keinesfalls übersehen werden darf.

Die Arbeit von Liu, Soulan, Chen Chen, and Nasser Kehtarnavaz, "A computationally efficient denoising and hole-filling method for depth image enhancement, " Real-Time Image and Video Processing 2016. Vol. 9897, International Society for Optics and Photonics, 2016 stellt Filter vor, mit denen fehlende Pixel aus der Nachbarschaft ergänzt werden.

Ein Verfahren nach US 2015/0235351 A1 erzeugt aus einer Tiefenkarte zwei gefilterte Tiefenkarten und setzt daraus eine verbesserte Tiefenkarte zusammen. Die Filter können aber auch nur die vorhandene Information mittels Interpolation durch bestimmte Filterkerne anders verteilen. Ein solches Ausnutzen von Nachbarschaftsbeziehungen ist durchaus geeignet, das Erscheinungsbild einer Tiefenkarte deutlich zu verbessern. Für den Personenschutz genügen solche Filter aber zumindest nicht allein, weil nicht garantieren ist, dass die sicherheitsgerichtete Reaktion wirklich nur unterbleibt, wenn keine Gefahr besteht.

Aus der EP 2 854 106 A1 ist eine 3D-Kamera nach dem Stereoskopieprinzip bekannt, die zwei Tiefenkarten mit unterschiedlichen Disparitätsbereichen fusioniert. Eine der Tiefenkarten wird aus Zwischenbildern mit verringerter Auflösung erzeugt.

Die oben schon erwähnte Sicherheitsnorm IEC61496 befasst sich auch mit dem Schutz gegen Übergreifen. Konkret wird dafür eine erforderliche Höhe von 1 400 mm für die obere Kante eines Schutzfeldes vorgegeben, wenn das Detektionsvermögen >= 70 mm ist, für alle anderen Fälle eine Höhe von 2 400 mm. Diese Angaben sind zum einen sehr unflexibel, denn die geringere Höhe von 1 400 mm kann nur für vergleichsweise groben Bein- oder Körperschutz verwendet werden, bei jedem feineren Detektionsvermögen als 70 mm werden bereits die ausgesprochen konservativen 2 400 mm maßgeblich. Außerdem handelt es sich bei diesen Normvorgaben um eine Anforderung an Schutzfelder, ein Zusammenhang mit einer Lücken- oder Fehlstellenbewertung eines Sensors wird dabei nicht hergestellt.

Es ist daher Aufgabe der Erfindung, eine verbesserte sichere Erfassung des Umfelds einer gefährlichen Maschine zu ermöglichen.

Diese Aufgabe wird durch einen sicheren optoelektronischen Sensor, insbesondere einen 3D-Sensor, sowie ein Verfahren zum Absichern eines Überwachungsbereichs mit mindestens einer Maschine nach Anspruch 1 beziehungsweise 10 gelöst. Der Sensor ist sicher, also für eine sicherheitstechnische Anwendung ausgelegt, und erfüllt dafür die einleitend genannten oder entsprechende Normen, um eine gefahrbringende Maschine abzusichern. Mit einem Lichtempfänger wird Empfangslicht aus dem Überwachungsbereich erfasst und daraus ein Empfangssignal gewonnen. Die Ausgestaltung des Lichtempfängers und damit die Art des Empfangssignals hängen von dem Sensor ab. Beispielsweise ist der Lichtempfänger ein Bildsensor, und die aus den Pixeln ausgelesenen Informationen werden summarisch als Empfangssignal bezeichnet.

Das Empfangssignal wird in dem Sensor ausgewertet, um auch als Tiefenwerte bezeichnete Abstände von dem Sensor zu Objekten zu erfassen, also beispielsweise eine Wolke von Messpunkten, insbesondere eine 3D-Punktewolke, oder eine Tiefenkarte. Die zunächst bezüglich des Sensors gemessenen Abstände werden oft in anderen Koordinaten ausgewertet, etwa als Höhe über dem Boden, weshalb zwischen dem Abstand von dem Sensor und der Höhe über dem Boden an vielen Stellen sprachlich kein Unterschied gemacht wird. Die Auswertung umfasst auch eine sicherheitstechnische Bewertung von Fehlstellen, Löchern oder Lücken, also Teilbereichen des Überwachungsbereichs, in denen kein Abstand oder jedenfalls kein Abstand mit ausreichender Verlässlichkeit gewonnen werden kann. Solche Lücken werden als Vordergrund und damit Objekt behandelt, es wird also vorsichtshalber angenommen, dass jede Lücke ein Objekt verbirgt. In einer Tiefenkarte beispielsweise werden die Pixel in der Lücke auf den vorgegebenen Abstand gesetzt, bei einer 3D-Punktewolke werden über die Ausdehnung der Lücke Messpunkte im vorgegebenen Abstand ergänzt. Lücken müssen nur in sicherheitsrelevanten Teilbereichen des Überwachungsbereichs beachtet werden, möglicherweise ist der eigentlich erfassbare Überwachungsbereich größer, aber darin ein Arbeitsbereich konfiguriert und durch diese Begrenzung festgelegt, dass außerhalb keine Sicherheitsüberwachung erfolgen muss.

Die Erfindung geht von dem Grundgedanken aus, nicht länger an dem herkömmlichen, maximal konservativen vorgegebenen Abstand Null unmittelbar vor dem Sensor festzuhalten. Bei dieser Annahme erzeugt nämlich die Lücke einen besonders großen projektiven Schatten. Stattdessen wird erfindungsgemäß in der Lücke ein Abstand für das dort angenommene fiktive Objekt vorgegeben, der einer Höhe zum Absichern gegen Übergreifen entspricht. Das reicht nämlich entgegen der bisher verfolgten Lösung schon aus, um Sicherheit zu gewährleisten und insbesondere das Übergreifen einer Schutzeinrichtung nach ISO 13855:2010 oder vergleichbarer Sicherheitsnormen korrekt abzusichern.

Die Erfindung hat den Vorteil, dass die Verfügbarkeit des Sensors verbessert wird. Sicherheit ist auch schon durch den herkömmlichen vorgegebenen Abstand direkt vor dem Sensor gewährleistet. Durch das maximale Unterschätzen des Abstands kann es aber zu unnötigen sicherheitsgerichteten Reaktionen kommen. Es ist also aus Gründen der Verfügbarkeit wünschenswert, den Abstand möglichst wenig zu unterschätzen, zugleich muss aber natürlich die normgerechte Sicherheit weiter erhalten bleiben, und deshalb ist zugleich zwingend erforderlich, den Abstand nie zu überschätzen. Ein vorgegebener Abstand auf der Höhe, bis zu der gegen Übergreifen geschützt wird, stellt hier ein Optimum dar.

Die Steuer- und Auswertungseinheit ist bevorzugt dafür ausgebildet, bei der Bestimmung von Abständen ein Zuverlässigkeitsmaß zu ermitteln und sicherheitsrelevante Teilbereiche als Lücken und damit Objekte in dem vorgegebenen Abstand zu behandeln, in denen das Zuverlässigkeitsmaß eine Zuverlässigkeitsschwelle unterschreitet. Beispielsweise wird bei einer Disparitätsschätzung einer Stereokamera zugleich ein Gütemaß für die jeweilige Korrelation und damit den resultierenden Abstandswert erzeugt. Lücken sind dann nicht nur Teilbereiche des Überwachungsbereichs, in denen gar keine Abstände erfasst werden konnten, sondern auch solche, in denen die Schätzung nicht als ausreichend zuverlässig angesehen wird. Die Lücken, die ja als fiktive Objekte angenommen werden, durchlaufen vorzugsweise ebenso wie tatsächlich erfasste Objekte eine Erkennung, ob es sich auch um sicherheitsrelevante Objekte handelt. Beispielsweise können kleine Lücken und Objekte eliminiert werden, es kann ein Körpermodell zum Filtern genutzt werden, oder es werden wie in EP 3 200 122 A1 fein erfasste Objekte einem benachbarten grob erfassten Objekt zugeschlagen beziehungsweise isolierte fein erfasste Objekte ignoriert.

Der vorgegebene Abstand ist vorzugsweise anhand einer maximalen Körpergröße festgelegt, insbesondere auf 2 400 mm. Das ist eine immer noch recht konservative Angabe für den vorgegebenen Abstand. Es ist noch denkbar, dass ein großer Mensch seine Fingerspitzen bis in diese Höhe ausstreckt, aber nicht in dieser Höhe unentdeckt in die Maschine übergreift. Da der Sensor vorzugsweise in Vogelperspektive in einem industriellen Umfeld mit großen Deckenhöhen eingesetzt wird, ist durch die Höhe entsprechend einer maximalen Körpergröße oder einer großzügigen Angabe dafür von 2 400 mm gegenüber einem vorgegeben Abstand direkt vor dem Sensor, also praktisch in Deckenhöhe, trotz der noch sehr konservativen Festlegung schon viel gewonnen.

Der Sensor ist bevorzugt für ein Detektionsvermögen ausgelegt, bei dem Objekte ab einer Mindestgröße sicher erfasst werden. Das Detektionsvermögen ist eine spezifizierte Eignung eines im Sinne der einleitenden oder vergleichbarer Normen sicheren Sensors, Objekte einer Mindestgröße im gesamten Überwachungsbereich sicher zu erfassen. Die entsprechende Auslegung des Sensors betrifft seinen Aufbau, also seine Optik, seinen Lichtempfänger und weitere mögliche, noch nicht genannte Komponenten wie etwa eine Beleuchtung, sowie die sichere Auswertung. Das Detektionsvermögen schließt erst einmal nicht aus, dass auch kleinere Objekte erfasst werden. Für Objekte, die kleiner sind als die Mindestgröße, ist aber der Schutz nicht garantiert, beispielsweise wird ein Finger bei einem für Armschutz ausgelegten Sensor nicht sicher erfasst. Deshalb werden Objekte kleiner als die Mindestgröße möglicherweise mittels Filtern in der Auswertung ausgeschlossen. Es ist auch möglich, eine Mindestgröße oberhalb des Detektionsvermögens zu wählen, also eine an sich bereitgestellte Auflösung nicht auszunutzen. Als Zahlenbeispiele seien 14 mm für Fingerschutz oder im Bereich von 30-80 mm für den Schutz von Extremitäten genannt, insbesondere 55 mm für Oberarmschutz.

Der Sensor ist vorzugsweise für ein Detektionsvermögen von 70 mm oder mehr ausgelegt, und die Höhe zum Absichern gegen Übergreifen beträgt 1 400 mm.

Das berücksichtigt die Normanforderungen insbesondere der IEC61496 oder vergleichbarer Normen zum Schutz gegen Übergreifen bei grobem Detektionsvermögen mit Bein- oder Körperschutz.

Der Sensor ist vorzugsweise für ein Detektionsvermögen kleiner 70 mm ausgelegt, und die Höhe zum Absichern gegen Übergreifen beträgt abhängig von dem Detektionsvermögen zwischen 1 400 mm und 2 400 mm. Hier sind Werte echt zwischen den genannten Grenzen gemeint. Eine Höhe von lediglich 1 400 mm kann nur bei grobem Detektionsvermögen verwendet werden. Sofern die konkreten Angaben der IEC61496 herangezogen werden, bleibt bei feinerem Detektionsvermögen nur der Sprung auf die vergleichsweise konservative Höhe von 2 400 mm. Bei genauer Betrachtung der Normvorschriften, die weiter unten vorgenommen wird, zeigt sich, dass abhängig von dem konkreten feineren Detektionsvermögen eine normgerechte Anpassung der Höhe mit entsprechend gegenüber einer Höhe von 2 400 mm verbesserter Verfügbarkeit möglich ist. Die oben dargestellten Überlegungen und Parameter gehen entsprechend der Normen in die minimal notwendigen Sicherheitszuschläge für die Bestimmung des Sicherheitsabstandes zur jeweiligen Gefahrenstelle ein.

Der Sensor ist vorzugsweise für ein Detektionsvermögen von 55 mm ausgelegt, und die Höhe zum Absichern gegen Übergreifen beträgt 2 000 mm. Das ist ein beispielhafter, aber relevanter Spezialfall einer in Abhängigkeit von einem Detektionsvermögen kleiner 70 mm vorgegebenen Höhe zwischen 1 400 mm und 2 400 mm. Somit ist für Ellenbogenschutz oder Oberarmdetektion bei 55 mm eine deutlich optimierte Vorgabe an den angenommenen Abstand in Lücken möglich, nämlich im Vergleich zu einer bei beliebigem Detektionsvermögen entsprechend EN 61496 pauschal normgerechten Höhe von 2 400 mm und erst recht zu einem Abstand direkt vor dem Sensor. Die 2 000 mm sind wie alle Angaben ein Mindestwert, eine größere Höhe bedeutet eine stets normgerechte Unterschätzung, mit der aber das Optimum verlassen und damit die Verfügbarkeit beeinträchtigt wird. Später in der Beschreibung wird die Höhe 2 000 mm für das Detektionsvermögen von 55 mm beispielhaft aus der Norm ISO 13855 hergeleitet. Dabei zeigt sich, dass die 2 000 mm noch um ein paar Zentimeter unterschritten werden dürfen. Wird dieser Puffer von konkret 43 mm allerdings tatsächlich ausgeschöpft, so gibt es keine weitere Toleranz, ohne die Sicherheit zu verlieren. Eine Höhe von 1,957 m, die millimetergenau einzuhalten ist, wäre wenig praktikabel, und deshalb wird sie mit 2 000 mm und dem Verständnis eines noch vorhandenen Spielraums angegeben.

Die Steuer- und Auswertungseinheit ist dafür ausgebildet, den kürzesten Abstand zwischen mindestens einer für die abzusichernde Maschine konfigurierten Gefahrenstelle und den in dem Überwachungsbereich erfassten Objekten zu bestimmen und an einer im Sinne der genannten oder vergleichbarer Normen sicheren Ausgabeschnittstelle bereitzustellen. Hier ist zu beachten, dass bisher der Abstand einen Abstand von dem Sensor oder Tiefenwert bezeichnete, während der nun erläuterte kürzeste Abstand sich auf einen Abstand zwischen Gefahrenstelle und Objekt bezieht. Herkömmlich wird über eine solche Ausgabeschnittstelle nur ein binäres Signal ausgegeben, ob eine Schutzfeldverletzung vorliegt (OSSD, Output Signal Switching Device). Nach dieser bevorzugten Ausführungsform werden nicht mehr Schutzfelder überwacht und auch nicht mehr durch den Sensor selbst binäre Absicherungssignale erzeugt und ausgegeben. Stattdessen wird die dafür erforderliche Information sicher, sehr kompakt und leicht zugänglich bereitgestellt. Der jeweils aktuelle kürzeste Abstand wird anstelle des bisher üblichen binären Absicherungssignals an der folglich nicht mehr als OSSD ausgestalteten sicheren Ausgabeschnittstelle für eine angeschlossene Steuerung zur Verfügung gestellt. Diese Steuerung, etwa die übergeordnete Steuerung einer Roboterzelle oder auch die Steuerung des Roboters selbst, kann anhand des kürzesten Abstands sehr einfach feststellen, ob eine Gefahr besteht, und übernimmt die eigentliche Absicherungsfunktion selbst.

Dabei wird das Arbeiten beziehungsweise die Kooperation mit Maschinen wesentlich flexibler gestaltbar und eine rasche, individuelle Reaktion auf Menschen im Umfeld der Maschine ermöglicht. Ein Eingriff in ein Schutzfeld lässt in der Regel nur noch einen Nothalt zu, da Schutzfelder gerade so definiert sind, dass in einem solchen Fall eine aufgrund des binären Abschaltsignals nicht mehr differenzierte Unfallgefahr besteht. Durch Überwachung von kürzesten Abständen sind jedoch auch mildere Eingriffe in den Prozessablauf möglich, die einen zeitaufwändigen Nothalt samt Wiederanlauf vermeiden und den Prozessablauf nach Möglichkeit ungestört weiterlaufen lassen oder die Annährung eines Menschen in den Prozessablauf integrieren. Arbeitsschritte der Maschine können dabei rechtzeitig umgeplant werden.

Die Steuer- und Auswertungseinheit ist bevorzugt dafür ausgebildet, mindestens eine Zusatzinformation an der Ausgabeschnittstelle bereitzustellen, wobei die Zusatzinformation mindestens einen weiteren kürzesten Abstand zu anderen Abschnitten des nächsten Objekts oder anderen Objekten, eine Objektposition, eine Bewegungsrichtung, eine Geschwindigkeit, eine Objekthülle oder eine Objektwolke aufweist. Damit wird einer an der Ausgabeschnittstelle angeschlossenen Steuerung eine differenzierte Auswertung ermöglicht. Es ist beispielsweise denkbar, dass nicht ein langsames nächstes Objekt, sondern ein schnelles etwas ferneres Objekt die größte Gefahr darstellt. Der mindestens eine zusätzliche kürzeste Abstand sollte ein anderes Objekt oder zumindest einen klar separierten anderen Objektbereich betreffen, wie einen anderen Arm, da sonst nur unmittelbare Nachbarpunkte zum kürzesten Abstand betrachtet würden, deren Zusatzinformation wenig Neues beiträgt. Objektpositionen sind hier vorzugsweise repräsentativ, etwa ein Objektschwerpunkt oder derjenige Objektpunkt, zu dem der kürzeste Abstand berechnet wurde. Es ist aber auch denkbar, Hüllkörper zu Objekten oder doch die 3D-Punktwolke des Objekts auszugeben. Bei allen diesen Zusatzinformationen handelt es sich jeweils um Zwischenergebnisse, die beim Auffinden des kürzesten Abstands ohnehin erfasst wurden, oder sehr leicht daraus ableitbare Größen, die den Aufwand nicht wesentlich erhöhen.

Der Sensor ist vorzugsweise eine 3D-Kamera. Auch ein Laserscanner ist ein 3D-Sensor, denn er erzeugt 3D-Punktwolken, die bei einem klassischen Laserscanner auf eine Abtastebene beschränkt sind. Durch in Elevation bewegte Abtastung oder mehrere in Elevation versetzte Abtaststrahlen entfällt diese Beschränkung bei einem Laserscanner. Bevorzugt ist aber eine 3D-Kamera, die zunächst jede bekannte Technik verwenden kann, wie ein Lichtlaufzeitprinzip mit direkter Laufzeitmessung von Lichtsignalen oder Phasenmessung oder eine Entfernungsschätzung aus Helligkeiten oder Fokuslagen (DFF, Depth from Focus, DFD, Depth from Defocus). Besonders bevorzugt nutzt die 3D-Kamera aber ein Triangulationsprinzip, bei dem zwei Kamerabilder einer bewegten Kamera oder einer Stereokamera untereinander korreliert werden, oder alternativ ein Beleuchtungsmuster mit einem Kamerabild korreliert wird, um so Disparitäten zu schätzen und daraus Abstände zu bestimmen.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Dabei werden vorzugsweise die Objekte mit einem beliebigen Detektionsvermögen erfasst, und der vorgegebene Abstand von dem Sensor ist anhand einer maximalen Körpergröße festgelegt, insbesondere auf 2 400 mm unter Berücksichtigung der ausgestreckten Arme, oder die Objekte werden mit einem Detektionsvermögen von 70 mm oder mehr erfasst, und die Höhe beträgt zum Absichern gegen Übergreifen 1 400 mm, oder die Objekte werden mit einem Detektionsvermögen kleiner 70 mm erfasst, und die Höhe zum Absichern gegen Übergreifen beträgt abhängig von dem Detektionsvermögen zwischen 1 400 mm und 2 400 mm, insbesondere 2 000 mm bei einem Detektionsvermögen von 55 mm.

Der kürzeste Abstand zwischen mindestens einer für die abzusichernde Maschine konfigurierten Gefahrenstelle und den in dem Überwachungsbereich erfassten Objekten wird bestimmt und vorzugsweise an eine Steuerung ausgegeben. Die Steuerung ist dem Sensor und der überwachten Maschine oder den überwachten Maschinen übergeordnet, oder es handelt sich um die Steuerung der Maschine selbst. Die Steuerung wertet die von dem Sensor gelieferten Abstände aus und leitet gegebenenfalls eine sicherheitsgerichtete Reaktion ein. Beispiele für eine Absicherung sind ein Nothalt, ein Abbremsen, ein Ausweichen oder ein Verbringen in eine sichere Position. Es ist denkbar, einen festen Mindestabstand vorzugeben, der etwa unter worst-case-Annahmen an Geschwindigkeiten oder aus bekannten oder vermessenen Nachlaufwegen bestimmt ist. Es sind auch dynamische Sicherheitsabstände unter anderem in Abhängigkeit von der aktuellen Geschwindigkeit der Maschine und des Objekt denkbar. In die Sicherheitsbewertung können Daten der Steuerung der Maschine einfließen. Es ist auch möglich, mehrere Sensoren zu nutzen, die einander in ihren Überwachungsbereichen und/oder ihrer Perspektive ergänzen.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:

Fig. 1    eine schematische dreidimensionale Darstellung einer 3D-Kamera und ihres Überwachungsbereich;

Fig. 2    eine schematische Seitenansicht einer beispielhaften Erfassungssituation einer Person in der Nähe einer Gefahrenstelle; und

Fig. 3    eine schematische Seitenansicht ähnlich Figur 2, jedoch mit höherer Gefahrenstelle.

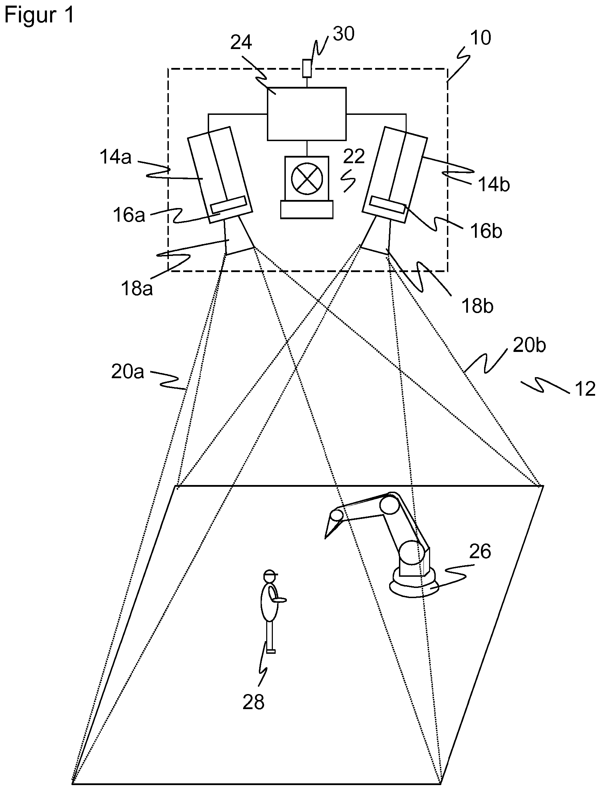

Figur 1 zeigt in einer schematischen dreidimensionalen Darstellung den allgemeinen Aufbau einer Stereokamera 10 zur Aufnahme einer Tiefenkarte. Die Stereokamera 10 ist nur ein Beispiel für einen erfindungsgemäßen Sensor, an dem die Erfassung von 3D-Bilddaten erläutert wird. Ebenso denkbar wären andere 3D-Kameras mit Erfassungsprinzipien wie Korrelation von Bild und projizierten Beleuchtungsmustern oder Bestimmung der Lichtlaufzeit sowie Laserscanner.

Zur Erfassung eines Raumbereichs 12 sind zwei Kameramodule 14a, 14b in einem bekannten festen Abstand zueinander montiert und nehmen jeweils Bilder des Raumbereichs 12 auf. In jeder Kamera ist ein Bildsensor 16a, 16b vorgesehen, üblicherweise ein matrixförmiger Aufnahmechip, der ein rechteckiges Pixelbild aufnimmt, beispielsweise ein CCD- oder ein CMOS-Sensor. Die beiden Bildsensoren 16a, 16b bilden gemeinsam einen 3D-Bildsensor zur Erfassung einer Tiefenkarte. Den Bildsensoren 16a, 16b ist je ein Objektiv 18a, 18b mit einer abbildenden Optik zugeordnet, welche in der Praxis als jedes bekannte Abbildungsobjektiv realisiert sein können. Der maximale Sichtwinkel dieser Optiken ist in Figur 1 durch gestrichelte Linien dargestellt, die jeweils eine Sichtpyramide 20a, 20b bilden.

Zwischen den beiden Bildsensoren 16a, 16b ist eine Beleuchtungseinheit 22 vorgesehen, um den Raumbereich 12 mit einem strukturierten Muster auszuleuchten. Die dargestellte Stereokamera ist demnach für aktive Stereoskopie ausgebildet, bei der das Muster auch einer an sich strukturlosen Szenerie überall auswertbare Kontraste aufprägt. Alternativ ist keine oder eine homogene Beleuchtung vorgesehen, um die natürlichen Objektstrukturen im Raumbereich 12 auszuwerten, was aber regelmäßig zu zusätzlichen Bildfehlern führt.

Mit den beiden Bildsensoren 16a, 16b und der Beleuchtungseinheit 22 ist eine Steuer- und Auswertungseinheit 24 verbunden. Die Steuer- und Auswertungseinheit 24 kann in verschiedenster Hardware implementiert sein, beispielsweise digitalen Bausteinen wie Mikroprozessoren, ASICs (Application Specific Integrated Circuit), FPGAs (Field Programmable Gate Array), GPUs (Graphics Processing Unit) oder Mischformen davon, die beliebig auf interne und externe Komponenten verteilbar sind, wobei externe Komponenten auch über Netzwerk oder eine Cloud eingebunden sein können, soweit Latenzen beherrscht oder toleriert werden können. Da das Erzeugen der Tiefenkarte und deren Auswertung sehr rechenintensiv sind, wird vorzugsweise eine zumindest teilweise parallele Architektur gebildet.

Die Steuer- und Auswertungseinheit 24 erzeugt mit Hilfe der Beleuchtungseinheit 22 das strukturierte Beleuchtungsmuster und empfängt Bilddaten der Bildsensoren 16a, 16b. Aus diesen Bilddaten berechnet sie mit Hilfe einer stereoskopischen Disparitätsschätzung die 3D-Bilddaten beziehungsweise die Tiefenkarte des Raumbereichs 12. Der gesamte erfassbare Raumbereich 12 oder auch Arbeitsbereich kann über eine Konfiguration eingeschränkt werden, beispielsweise um störende oder nicht notwendige Bereiche auszublenden.

Eine wichtige sicherheitstechnische Anwendung der Stereokamera 10 ist die Überwachung einer Maschine 26, die in der Figur 1 durch einen Roboter symbolisiert ist. Die Maschine 26 kann auch wesentlich komplexer sein als gezeigt, aus vielen Teilen bestehen oder sogar eigentlich eine Anordnung mehrerer Maschinen sein, etwa mehrerer Roboter oder Roboterarme. Die Steuer- und Auswertungseinheit 24 prüft, wo sich ein Objekt 28, dargestellt als Person, in Bezug auf die Maschine 26 befindet. Über eine sichere Schnittstelle 30 wird ein kürzester Abstand eines Objekts 28 zu der Maschine 26 ausgegeben, entweder direkt an die Maschine 26 oder an eine Zwischenstation wie eine sichere Steuerung. Der kürzeste Abstand, der eine Ausgabegröße darstellt, darf nicht mit dem Abstand von der Stereokamera 10 zu Objektpunkten in dem Raumbereich 12 verwechselt werden, also den Tiefenwerten. Die Stereokamera 10 ist vorzugsweise fehlersicher im Sinne von Sicherheitsnormen wie den einleitend genannten ausgelegt.

Die an die sichere Schnittstelle 30 angeschlossene Steuerung, sei es eine übergeordnete Steuerung oder diejenige der Maschine 26, wertet den kürzesten Abstand zur Erfüllung einer Sicherheitsfunktion aus, zum Beispiel eines Speed-and-Separation Monitoring nach ISO/TS 15066, und vergleicht dazu den kürzesten Abstand mit einem erforderlichen Sicherheitsabstand etwa nach ISO 13855. Im Gefährdungsfall wird eine sicherheitsgerichtete Reaktion eingeleitet, um beispielsweise die Maschine 26 anzuhalten, abzubremsen oder ausweichen zu lassen. Ob dies erforderlich ist, kann neben dem kürzesten Abstand von weiteren Bedingungen, wie den Geschwindigkeiten oder Bewegungsrichtungen oder der Beschaffenheit von Objekt 28 und Maschinenbereich 26 der drohenden Kollision abhängen. Alternativ zu der zweistufigen Ausgabe von kürzesten Abständen und deren nachgelagerter Bewertung ist auch eine herkömmliche Schutzfeldauswertung in der Stereokamera 10 oder einer daran angeschlossenen Steuerung mit Ausgabe eines binären sicherheitsgerichteten Signals denkbar.

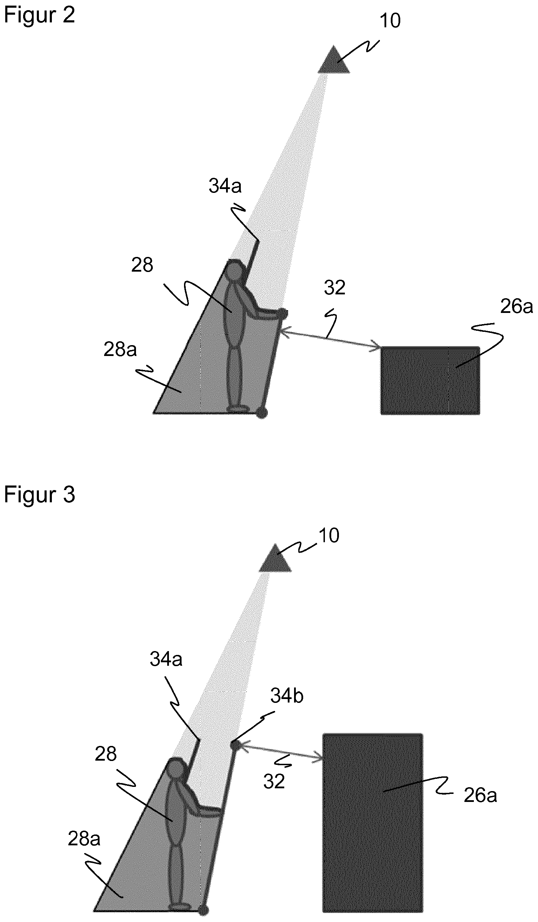

Figur 2 zeigt eine schematische Seitenansicht einer Überwachungssituation. Die Maschine 26 wird hier vorteilhaft als Gefahrenstelle 26a modelliert. Das ist ein Raumbereich, in dem die Maschine 26 in einem jeweiligen Zeitabschnitt Arbeitsbewegungen ausführt. Die Gefahrenstelle 26a kann die Maschine 26 mit etwas Abstand umgeben, um den Arbeitsbewegungen ausreichend Spiel zu lassen. Außerdem ist es für die Berechnungen vorteilhaft, geometrisch einfache Gefahrenstellen 26a wie Quader oder Kugeln zu definieren, wofür dann gewisse Leerräume in Kauf genommen werden. Mehrere Gefahrenstellen 26a umgeben bei Bedarf mehrere Maschinen 26 und/oder mehrere bewegliche Teilabschnitte einer Maschine 26. Gefahrenstellen 26a können starr sein und sämtlich denkbaren Arbeitsbewegungen umfassen. Alternativ sind jeweils Gefahrenstellen 26a für Teilabschnitte der Arbeitsbewegung definiert, die in einer dem Prozess entsprechenden Abfolge benutzt werden und die kleiner und besser angepasst sind.

Die Gefahrenstelle 26a selbst wird vorzugsweise als frei von zu erfassenden Objekten 28 angesehen, oder vielmehr als durch die Maschine 26 blockiert. Tatsächlich wäre je nach Hüllkörper, der die Maschine 26 als Gefahrenstelle 26a modelliert, darin durchaus Raum für Objekte 28. Auch bildet die Maschine 26 natürlich selbst ein Objekt 28, das zunächst von der Stereokamera 10 erfasst wird. All das wird aber vorzugsweise absichtlich in der Auswertung ignoriert und die Gefahrenstelle 26a als leerer, von Objekten 28 freier Block modelliert, um die Überwachung und die Bestimmung kürzester Abstände zu vereinfachen, denn die Dynamik der Maschine 26 innerhalb der Gefahrenstelle 26a spielt so keine Rolle. Sicherheitstechnisch ist dies unproblematisch, denn jedes Objekt 28 wird rechtzeitig erkannt, wenn es sich der Gefahrenstelle 26a nähert.

Die Steuer- und Auswertungseinheit 24 berechnet kontinuierlich den kürzesten Abstand zwischen Gefahrenstelle 26a und Objekt 28, wobei jeweilige projektive Schatten einbezogen sind. Dazu wird das Minimum der Abstände zwischen den Punkten in einem durch das Objekt 28 abgeschatteten Bereich 28a und den Punkten der Gefahrenstelle 26a um die Maschine 26 gegebenenfalls auch samt projektivem Schatten bestimmt. Der resultierende kürzeste Abstand 32 ist in Figur 2 durch einen Pfeil eingezeichnet, welcher den nächsten Punkt des abgeschatteten Bereichs 28a mit dem nächsten Punkt der Gefahrenstelle 26a verbindet. Dieser kürzeste Abstand wird zyklisch oder azyklisch an der sicheren Schnittstelle 30 bereitgestellt. Typische Ausgaberaten sind mehrmals pro Sekunde, es ist aber auch eine seltenere Aktualisierung denkbar, je nach geforderter und möglicher Ansprechzeit der Stereokamera 10. Eine an der sicheren Schnittstelle 30 angeschlossene übergeordnete Steuerung, insbesondere diejenige der Maschine 28, plant dann erforderlichenfalls abhängig von dem kürzesten Abstand den nächsten Arbeitsschritt neu, vermindert die Arbeitsgeschwindigkeit oder hält notfalls die Maschine 26 sicherheitsgerichtet an, so dass durchgehend der erforderliche Sicherheitsabstand zwischen Mensch und Maschine gewahrt bleibt.

Zur Erfüllung der Sensorfunktion, also der Berechnung und insbesondere der Ausgabe des kürzesten Abstands zu einer konfigurierten Gefahrenstelle 26a, muss zu jeder gültigen Objektdetektion ein Abstands- beziehungsweise Tiefenwert bestimmt werden. Eine mögliche Repräsentation ist eine sogenannte Detektionstiefenkarte, deren Pixel einen Abstandswert enthalten, wo immer an der jeweiligen lateralen Position ein gültiges Objekt 28 erkannt wurde. Gültig bedeutet in diesem Zusammenhang, dass das Objekt 28 auch nach Filterungen mit einer Mindestgröße, einem Körpermodell, einem Zusammenhang mit einem grob erfassten Objekt wie in EP 3 200 122 A1 oder dergleichen noch als relevant betrachtet wird. Bereiche, in denen kein gültiges Objekt 28 erkannt wurde, sind in der Detektionstiefenkarte leer. Problematische Bereiche, die alternativ auch als Fehlstellen, Löcher oder Lücken bezeichnet werden, müssen aber in der Detektionstiefenkarte berücksichtigt werden, und zwar als (fiktive) Objekte in einem vorgegebenen Abstand zu der Stereokamera 10. Nachfolgend wird erläutert, wie dieser vorgegebene Abstand zugleich normgerecht, d.h. die Sicherheit wahrend, und zur Optimierung der Verfügbarkeit möglichst weit von der Stereokamera 10 entfernt gewählt wird. Diese Ausführungen gelten ebenso, wenn statt einer Detektionstiefenkarte eine andere Repräsentation gewählt wird.

Herkömmlich wird den Pixeln in einer Lücke ein Abstand Null unmittelbar vor der Stereokamera 10 zugewiesen. Das bedeutet aber, dass der gesamte Sichtstrahl bis zum Boden für die Berechnung kürzester Abstände herangezogen werden kann. Die Verfügbarkeit wird folglich verbessert, wenn ein möglichst großer Abstand zu der Stereokamera 10 vorgegeben wird, anders ausgedrückt bei der vorteilhaft dargestellten Perspektive von oben eine möglichst geringe Höhe über einer Grundfläche. Um dennoch die Sicherheit zu gewährleisten, wird zugleich eine Höhe gewählt, die ausreichend ist, um ein Übergreifen beispielsweise nach ISO 13855:2010 zu verhindern. Dann ergeben sich kürzere Sichtstrahlen, wie in Figur 2 für eine beispielhafte Lücke 34a gezeigt.

Erfindungsgemäß werden also Lücken 34a auf die niedrigste noch sichere Höhe gelegt. Dadurch erhalten die Sichtstrahlen eine minimale Länge, und die Verfügbarkeit wird maximiert.

Figur 3 zeigt eine schematische Seitenansicht ähnlich Figur 2, jedoch mit einer höheren Gefahrenstelle 26a. Gerade bei höheren Gefahrenstellen 26a kann die Höhe, die Lücken 34a zugewiesen wird, für die Berechnung des kürzesten Abstands entscheidend werden. In Figur 2 besteht der kürzeste Abstand 32 zu einem Punkt im abgeschatteten Bereich 28a.

In Figur 3 wurde zur Illustration eine weitere Lücke 34b an einem der Gefahrenstelle 26a zugewandten Rand hinzugefügt, und der kürzeste Abstand 32 besteht hier zu der Lücke 34b beziehungsweise deren Sichtstrahl. Würde man der Lücke 34b eine größere Höhe zuweisen, so würde ein noch geringerer kürzester Abstand 32 resultieren, was einer höheren Gefährdung entspricht und die Verfügbarkeit beeinträchtigt. Es ist zugleich zu erkennen, dass die niedrigere Gefahrenstelle 26b in Figur 2 auch bei Hinzufügen einer weiteren Lücke 34b am Rand weiterhin den kürzesten Abstand 32 zu dem abgeschatteten Bereich aufwiese. Das unterstreicht nochmals, dass die einer Lücke 34a-b zugewiesene Höhe vor allem bei hohen Gefahrenstellen 26a Auswirkungen auf die Verfügbarkeit hat.

Es lässt sich anschaulich mit einem Körpermodell begründen, dass es möglich sein muss, unter Wahrung der Sicherheit einer Lücke 34a-b eine Höhe zuzuweisen, die niedriger ist als bei einem Abstand Null zu der Stereokamera 10. Das Detektionsvermögen der Stereokamera 10 bestimmt, welche Objekte 28 als sicherheitsrelevant noch zuverlässig erkannt werden müssen. Beispielsweise beträgt das Detektionsvermögen für Ellenbogenschutz d=55 mm und für Handgelenkschutz d=40 mm. Ein Körpermodell gibt die maximale Größe und maximale Länge der Extemitäten vor, und der Mensch steht immer auf einer definierten Grundfläche. Daraus ergibt sich eine maximale Höhe über der Grundfläche, in der die entsprechenden Körperteile noch erwartet werden oder gar übergreifen können und deshalb überhaupt erkannt werden müssen. Es genügt, wenn der Abstandswert für Lücken 34a-b auf diese Höhe gesetzt wird.

Die erforderliche Höhe lässt sich aber auch aus den Sicherheitsnormen herleiten beziehungsweise stichhaltig damit begründen. Dabei wird hier die ISO 13855 und die IEC/TS 61496-4-3 herangezogen. Entsprechende Regelungen sind auch in einer alternativ gültigen heutigen oder zukünftigen Norm zu erwarten.

Danach gilt für den minimalen Sicherheitsabstand $S_0$ zur Gefahrenstelle

$$S_0 = (K \times T) + C + C_{tz} + d$$

mit

C Zuschlag in Abhängigkeit vom Detektionsvermögen, C = f (d),
$C_{tz}$ Zuschlag für Systemtoleranzen,
d Detektionsvermögen und
K x T Term der Bewegung.

Die Systemtoleranzen $C_{tz}$ sollen an dieser Stelle ignoriert und als Beispiel ein Detektionsvermögen von d=55 mm angenommen werden. Nach einer Schätzung basierend auf Daten von B. Flügel, H. Greil, K. Sommer, Anthropologischer Atlas, Verlag Tribüne Berlin 1986, ISBN 3-7303-0042-3 wird bei einem Detektionsvermögen 40 mm < d ≤ 55 mm der Zuschlag C = 12 d - 272 mm, somit C = 388 mm für d = 55 mm.

Im Sinne der Norm sollte nun sichergestellt sein, dass $C_{RO} < C + d$, wobei $C_{RO}$ den Zuschlag für Schutz gegen Übergreifen bezeichnet (RO, Reach Over). Diese Bedingung ergibt sich daraus, dass $S_{RO} < S0$ gelten sollte, mit $S_{RO} = K \times T + C_{RO}$.

Tabelle 1 der ISO 13855:2010 listet verschiedene Werte für $C_{RO}$ zu Kombinationen der Höhe a der Gefahrenstelle und der Höhe b des Detektionsfeldes auf. Um Gefahrenstellen beliebiger Höhe überwachen zu können, wird hier das Maximum der $C_{RO}$ für alle a bei gegebenem b betrachtet. Alternativ könnte auch eine Tabelle oder Rechenvorschrift hinterlegt werden, um die Abhängigkeit von a für die konkret konfigurierten Gefahrenstellen 26a zu berücksichtigen.

Bei b= 2 000 mm ist das maximale $C_{RO}$ = 400 mm. Damit ist C + d = 443 mm > $C_{RO}$ und somit eine Höhe von 2 000 mm für ein Detektionsvermögen d = 55 mm sicher.

Die maximale Höhe des Detektionsbereiches bedeutet, dass darüber keine Objekte 28 detektiert werden müssen beziehungsweise nur deren Verdeckung 28a innerhalb des Detektionsbereiches relevant ist. Daraus lässt sich aber schließen, dass Objekte 28 mit unbekannter Entfernung, also Lücken 34a-b, samt ihrer Verdeckung auch nur bis zu maximal dieser Höhe betrachtet werden müssen. Die aus der Norm abgeleitete Höhe stellt sicher, dass die Gefahrenstelle 26a nicht mehr erreicht werden kann, wenn eine Detektion des Objektes 28 bis zu dieser Höhe oder ersatzweise eine Projektion einer Lücke 34a-b auf diese Höhe vorgenommen wird.

**Patentansprüche**

1. Sicherer optoelektronischer Sensor (10) zum Absichern eines Überwachungsbereichs (12) mit mindestens einer Maschine (26) aus der Vogelperspektive, wobei der Sensor (10) mindestens einen Lichtempfänger (16a-b) zum Erzeugen eines Empfangssignals aus Empfangslicht aus dem Überwachungsbereich (12) sowie eine Steuer- und Auswertungseinheit (24) aufweist, die dafür ausgebildet ist, aus dem Empfangssignal Abstände zu Objekten (28) in dem Überwachungsbereich (12) zu bestimmen und Lücken (34a-b), d.h. sicherheitsrelevante Teilbereiche des Überwachungsbereichs (12), in denen kein zuverlässiger Abstand bestimmt werden kann, als fiktive Objekte in einem vorgegebenen Abstand zu behandeln,
**dadurch gekennzeichnet,**

**dass** die Steuer- und Auswertungseinheit (24) dafür ausgebildet ist, den kürzesten Abstand (32) zwischen mindestens einer für die abzusichernde Maschine (26) konfigurierten Gefahrenstelle (26a) und den in dem Überwachungsbereich (12) erfassten Objekten (28) sowie den fiktiven Objekten jeweils einschließlich der projektiven Schatten, d.h. der Sichtstrahlen von dem Sensor (10) zum Boden in einem durch das Objekt abgeschatteten Bereich (28a) zu bestimmen, und dass der Abstand für ein fiktives Objekt auf einer möglichst geringen Höhe vorgegeben ist, die ausreichend ist, um ein Übergreifen einer Schutzeinrichtung nach einer Sicherheitsnorm zu verhindern, um so den für die Berechnung kürzester Abstände herangezogenen Sichtstrahlen fiktiver Objekte eine minimale Länge zu geben.

2. Sensor (10) nach Anspruch 1, wobei die Steuer- und Auswertungseinheit (24) dafür ausgebildet ist, bei der Bestimmung von Abständen zum Sensor (10) ein Zuverlässigkeitsmaß zu ermitteln und sicherheitsrelevante Teilbereiche als Lücken (34a-b) und damit fiktive Objekte in dem vorgegebenen Abstand zu behandeln, in denen das Zuverlässigkeitsmaß eine Zuverlässigkeitsschwelle unterschreitet.

3. Sensor (10) nach Anspruch 1 oder 2, wobei der vorgegebene Abstand anhand einer maximalen menschlichen Körpergröße festgelegt ist, insbesondere auf 2 400 mm.

4. Sensor (10) nach einem der vorhergehenden Ansprüche, wobei der Sensor (10) für ein Detektionsvermögen ausgelegt ist, bei dem Objekte (28) ab einer Mindestgröße sicher im Sinne einer Sicherheitsnorm erfasst werden.

5. Sensor (10) nach einem der vorhergehenden Ansprüche, wobei der Sensor (10) für ein Detektionsvermögen von 70 mm oder mehr ausgelegt ist und die Höhe zum Absichern gegen Übergreifen 1 400 mm beträgt.

6. Sensor (10) nach einem der Ansprüche 1 bis 4, wobei der Sensor (10) für ein Detektionsvermögen kleiner 70 mm ausgelegt ist und die Höhe zum Absichern gegen Übergreifen abhängig von dem Detektionsvermögen zwischen 1 400 mm und 2 400 mm beträgt.

7. Sensor (10) nach einem der vorhergehenden Ansprüche, wobei der Sensor (10) für ein Detektionsvermögen von 55 mm ausgelegt ist und die Höhe zum Absichern gegen Übergreifen 2 000 mm beträgt.

**8.** Sensor (10) nach einem der vorhergehenden Ansprüche,
wobei die Steuer- und Auswertungseinheit (24) dafür ausgebildet ist, den kürzesten Abstand (32) an einer sicheren Ausgabeschnittstelle (30) bereitzustellen.

**9.** Sensor (10) nach einem der vorhergehenden Ansprüche,
wobei der Sensor (10) eine 3D-Kamera, insbesondere eine Stereokamera ist.

**10.** Verfahren zum Absichern eines Überwachungsbereichs (12) mit mindestens einer Maschine (26) aus der Vogelperspektive mit einem sicheren optoelektronischen Sensor (10), wobei aus Empfangslicht aus dem Überwachungsbereich (12) ein Empfangssignal erzeugt und das Empfangssignal ausgewertet wird, um Abstände zu Objekten (28) in dem Überwachungsbereich (12) zu bestimmen, wobei Lücken (34a-b), d.h. sicherheitsrelevante Teilbereiche des Überwachungsbereichs (12), in denen kein zuverlässiger Abstand bestimmt werden kann, als fiktive Objekte in einem vorgegebenen Abstand behandelt werden, **dadurch gekennzeichnet,**
**dass** der kürzeste Abstand zwischen mindestens einer für die abzusichernde Maschine (26) konfigurierten Gefahrenstelle (26a) und den in dem Überwachungsbereich (12) erfassten Objekten (28) sowie den fiktiven Objekten jeweils einschließlich der projektiven Schatten, d.h. der Sichtstrahlen von dem Sensor (10) zum Boden in einem durch das Objekt abgeschatteten Bereich (28a) bestimmt wird und dass der Abstand für ein fiktives Objekt auf einer möglichst geringen Höhe vorgegeben ist, die ausreichend ist, um ein Übergreifen einer Schutzeinrichtung nach einer Sicherheitsnorm zu verhindern, um so den für die Berechnung kürzester Abstände herangezogenen Sichtstrahlen fiktiver Objekte eine minimale Länge zu geben.

**11.** Verfahren nach Anspruch 10,
wobei die Objekte (28) mit einem beliebigen Detektionsvermögen erfasst werden und der vorgegebene Abstand anhand einer maximalen Körpergröße festgelegt ist, insbesondere auf 2 400 mm,
oder wobei die Objekte (28) mit einem Detektionsvermögen von 70 mm oder mehr erfasst werden und die Höhe zum Absichern gegen Übergreifen 1 400 mm beträgt
oder wobei die Objekte (28) mit einem Detektionsvermögen kleiner 70 mm erfasst werden und die Höhe zum Absichern gegen Übergreifen abhängig von dem Detektionsvermögen zwischen 1 400 mm und 2 400 mm beträgt, insbesondere 2 000 mm bei einem Detektionsvermögen von 55 mm.

**12.** Verfahren nach Anspruch 10 oder 11,
wobei der kürzeste Abstand an eine Steuerung ausgegeben wird.

## Claims

**1.** A safe optoelectronic sensor (10) for safeguarding a monitored area (12) with at least one machine (26) from a bird's eye view, the sensor (10) comprising at least one light receiver (16a-b) for generating a reception signal from received light from the monitored area (12) and a control and evaluation unit (24) which is configured to determine distances to objects (28) in the monitored area (12) from the reception signal and to detect gaps (34a-b), i.e. safety-relevant subareas of the monitored area (12) where no reliable distance can be determined, as fictitious objects at a predetermined distance,
**characterized in that** the control and evaluation unit (24) is configured to determine the shortest distance (32) between at least one danger zone (26a) configured for the machine (26) to be safeguarded and the objects (28) detected in the monitoring area (12) as well as the fictitious objects including the respective projective shadows, i.e. the visual rays from the sensor (10) to the ground in an area (28a) shaded by the object, and **in that** the distance for a fictitious object is specified at a height which is as small as possible and which is sufficient to prevent reach over a protective device according to a safety standard, so as to give a minimum length to the visual rays of fictitious objects used for calculating the shortest distances.

**2.** The sensor (10) according to claim 1,
wherein the control and evaluation unit (24) is configured to determine a reliability measure when determining distances to the sensor (10) and to treat safety-relevant subareas as gaps (34a-b) and thus fictitious objects at the predetermined distance in which the reliability measure falls below a reliability threshold.

**3.** The sensor (10) according to claim 1 or 2,
wherein the specified distance is determined on the basis of a maximum human body height, in particular 2 400 mm.

**4.** The sensor (10) according to any of the preceding claims,
wherein the sensor (10) is configured for a detection capability where objects (28) from a minimum size are reliably detected in the sense of a safety standard.

**5.** The sensor (10) according to any of the preceding claims,

wherein the sensor (10) is configured for a detection capability of 70 mm or more and the height for protecting against reach over is 1 400 mm.

6. The sensor (10) according to any of claims 1 to 4, wherein the sensor (10) is configured for a detection capacity of less than 70 mm and the height for protection against reach over is between 1 400 mm and 2 400 mm depending on the detection capacity.

7. The sensor (10) according to any of the preceding claims, wherein the sensor (10) is configured for a detection capacity of 55 mm and the height for protecting against reach over is 2 000 mm.

8. The sensor (10) according to any of the preceding claims, wherein the control and evaluation unit (24) is configured to provide the shortest distance (32) at a safe output interface (30).

9. The sensor (10) according to any of the preceding claims, wherein the sensor (10) is a 3D camera, in particular a stereo camera.

10. A method for safeguarding a monitored area (12) with at least one machine (26) from a bird's eye view using a safe optoelectronic sensor (10), wherein a reception signal is generated from received light from the monitored area (12) and the reception signal is evaluated to determine distances to objects (28) in the monitored area (12), wherein gaps (34a-b), i.e. safety-relevant subareas of the monitored area (12) where no reliable distance can be determined, are treated as fictitious objects at a predetermined distance, **characterized in that** the shortest distance between at least one danger zone (26a) configured for the machine (26) to be safeguarded and the objects (28) detected in the monitored area (12) as well as the fictitious objects including the respective projective shadows, i.e. the visual rays from the sensor (10) to the ground in an area (28a) shaded by the object, and **in that** the distance for a fictitious object is specified at a height which is as small as possible and which is sufficient to prevent reach over a protective device according to a safety standard, so as to give a minimum length to the visual rays of fictitious objects used for the calculation of the shortest distances.

11. The method according to claim 10, wherein the objects (28) are detected with any detection capability and the predetermined distance is determined on the basis of a maximum body height, in particular to 2,400 mm,

or wherein the objects (28) are detected with a detection capacity of 70 mm or more and the height for protecting against reach over is 1 400 mm, or wherein the objects (28) are detected with a detection capacity of less than 70 mm and the height for protecting against reach over is between 1 400 mm and 2 400 mm depending on the detection capacity, in particular 2 000 mm with a detection capacity of 55 mm.

12. The method according to claim 10 or 11, wherein the shortest distance is output to a control.

**Revendications**

1. Capteur optoélectronique de sécurité (10) pour sécuriser une zone à surveiller (12), présentant au moins une machine (26), en perspective à vol d'oiseau, le capteur (10) comprenant au moins un récepteur de lumière (16a - b) pour générer un signal de réception à partir de la lumière de réception provenant de la zone à surveiller (12) et une unité de commande et d'évaluation (24) qui est réalisée pour déterminer à partir du signal de réception des distances par rapport à des objets (28) dans la zone à surveiller (12) et pour traiter des lacunes (34a - b), c'est-à-dire des zones partielles de la zone à surveiller (12) importantes pour la sécurité, dans lesquelles aucune distance fiable ne peut être déterminée, en tant qu'objets fictifs à une distance prédéfinie, **caractérisé en ce que** l'unité de commande et d'évaluation (24) est réalisée pour déterminer la plus courte distance (32) entre au moins un emplacement de danger (26a), configuré pour la machine (26) à sécuriser, et les objets (28) détectés dans la zone à surveiller (12) ainsi que les objets fictifs, y compris les ombres projetées respectives, c'est-à-dire les rayons visuels du capteur (10) au sol dans une zone (28a) ombrée par l'objet, et **en ce que** la distance pour un objet fictif est prédéfinie à une hauteur aussi faible que possible qui est suffisante pour empêcher une intervention par le haut sur un dispositif de protection selon une norme de sécurité, afin de donner ainsi une longueur minimale aux rayons visuels d'objets fictifs, utilisés pour le calcul des distances les plus courtes.

2. Capteur (10) selon la revendication 1, dans lequel l'unité de commande et d'évaluation (24) est réalisée pour définir une mesure de fiabilité lors de la détermination de distances par rapport au capteur (10) et pour traiter des zones partielles importantes pour la sécurité en tant que lacunes (34a - b) et donc en tant qu'objets fictifs à la distance prédéfinie, dans lesquels la mesure de fiabilité tombe en dessous d'un seuil de fiabilité.

**3.** Capteur (10) selon la revendication 1 ou 2, dans lequel la distance prédéfinie est fixée sur la base d'une taille maximale d'un corps humain, en particulier à 2 400 mm.

**4.** Capteur (10) selon l'une des revendications précédentes, dans lequel le capteur (10) est conçu pour une capacité de détection à laquelle les objets (28) dépassant une taille minimale sont détectés de manière sûre dans le sens d'une norme de sécurité.

**5.** Capteur (10) selon l'une des revendications précédentes, dans lequel le capteur (10) est conçu pour une capacité de détection de 70 mm ou plus, et la hauteur pour la sécurisation à l'encontre d'une intervention par le haut est de 1 400 mm.

**6.** Capteur (10) selon l'une des revendications 1 à 4, dans lequel le capteur (10) est conçu pour une capacité de détection inférieure à 70 mm, et la hauteur pour la sécurisation à l'encontre d'une intervention par le haut est comprise entre 1 400 mm et 2 400 mm, en fonction de la capacité de détection.

**7.** Capteur (10) selon l'une des revendications précédentes, dans lequel le capteur (10) est conçu pour une capacité de détection de 55 mm, et la hauteur pour la sécurisation à l'encontre d'une intervention par le haut est de 2 000 mm.

**8.** Capteur (10) selon l'une des revendications précédentes, dans lequel l'unité de commande et d'évaluation (24) est réalisée pour assurer la plus courte distance (32) à une interface de sortie (30) sécurisée.

**9.** Capteur (10) selon l'une des revendications précédentes, dans lequel le capteur (10) est une caméra 3D, en particulier une caméra stéréo.

**10.** Procédé pour sécuriser une zone à surveiller (12), présentant au moins une machine (26), en perspective à vol d'oiseau, à l'aide d'un capteur optoélectronique de sécurité (10), dans lequel un signal de réception est généré à partir de la lumière de réception provenant de la zone à surveiller (12), et le signal de réception est évalué pour déterminer des distances par rapport à des objets (28) dans la zone à surveiller (12), des lacunes (34a - b), c'est-à-dire des zones partielles de la zone à surveiller (12) importantes pour la sécurité, dans lesquelles aucune distance fiable ne peut être déterminée, sont traitées en tant qu'objets fictifs à une distance prédéfinie, **caractérisé en ce que**

on détermine la plus courte distance entre au moins un emplacement de danger (26a), configuré pour la machine (26) à sécuriser, et les objets (28) détectés dans la zone à surveiller (12) ainsi que les objets fictifs, y compris les ombres projetées respectives, c'est-à-dire les rayons visuels du capteur (10) au sol dans une zone (28a) ombrée par l'objet, et **en ce que** la distance pour un objet fictif est prédéfinie à une hauteur aussi faible que possible qui est suffisante pour empêcher une intervention par le haut sur un dispositif de protection selon une norme de sécurité, afin de donner ainsi une longueur minimale aux rayons visuels d'objets fictifs, utilisés pour le calcul des distances les plus courtes.

**11.** Procédé selon la revendication 10, dans lequel les objets (28) sont détectés avec une capacité de détection quelconque, et la distance prédéfinie est fixée sur la base d'une taille maximale d'un corps, en particulier à 2 400 mm, ou les objets (28) sont détectés avec une capacité de détection de 70 mm ou plus, et la hauteur pour la sécurisation à l'encontre d'une intervention par le haut est de 1 400 mm, ou les objets (28) sont détectés avec une capacité de détection inférieure à 70 mm, et la hauteur pour la sécurisation à l'encontre d'une intervention par le haut est comprise entre 1 400 mm et 2 400 mm, en fonction de la capacité de détection, et est en particulier de 2 000 mm pour une capacité de détection de 55 mm.

**12.** Procédé selon la revendication 10 ou 11, dans lequel la distance la plus courte est transmise à un dispositif de commande.

Figur 1

Figur 2

Figur 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2275990 B1
- EP 2819109 A1
- US 7925077 B2
- EP 3200122 A1
- EP 1933167 A2
- US 20150294483 A1
- US 9094660 B2
- US 20150235351 A1
- EP 2854106 A1

**In der Beschreibung aufgeführte Nicht-Patentliteratur**

- **DIE ARBEIT VON LIU ; SOULAN ; CHEN CHEN ; NASSER KEHTARNAVAZ.** A computationally efficient denoising and hole-filling method for depth image enhancement. *Real-Time Image and Video Processing,* 2016, 9897